# EUROPEAN PATENT APPLICATION

(11) **EP 1 555 306 A1**
(43) Date of publication of application: **20.07.2005**
(21) Application number: 03799135.3
(22) Date of filing: 26.09.2003
(51) Int. Cl.: C09K 11/08, C09K 11/56, H01J 29/20, H01J 31/12

(54) **FLUORESCENT MATERIAL FOR DISPLAY UNIT, PROCESS FOR PRODUCING THE SAME AND COLOR DISPLAY UNIT INCLUDING THE SAME**

(30) Priority: 30.09.2002 JP 2002285786; 30.09.2002 JP 2002285797
(71) Applicant: Kabushiki Kaisha Toshiba, Tokyo 105-8001 (JP)
(72) Inventor: Yamaguchi, Kenichi, c/o Intel. Property Division, Minato-ku, Tokyo 105-8001 (JP); Inamura, Masaaki, c/o Intel. Property Division, Minato-ku, Tokyo 105-8001 (JP); Ito, Takeo, c/o Intel. Property Division,, Minato-ku, Tokyo 105-8001 (JP); Matsuura, Susumu, Yokohama-shi, Kanagawa 244-0841 (JP)
(74) Representative: HOFFMANN EITLE
(86) International application number: PCT/JP2003/012285
(87) International publication number: WO 2004/031322

(57) **Abstract**

Fluorescent material for display unit (1) comprising fluorescent substance matrix particles (2) constituted substantially of zinc sulfide of crystal structure composed mainly of, for example, hexagonal crystal or cubic crystal. First activator (3) is localized in surface layer part (2a) of the fluorescent substance matrix particles (2). Second activator is uniformly dispersed in the fluorescent substance matrix particles (2). The color of light emitted from a fluorescent substance of zinc sulfide having a crystal structure of, for example, hexagonal crystal can be improved by such a particle structure. Alternatively, unwanted light emission attributed to an electron beam on the low voltage side of the fluorescent substance for display unit (1) can be suppressed.

## Description

### TECHNICAL FIELD

The present invention relates to a fluorescent substance for display unit to be used for a color cathode ray tube, a field emission type display unit and the like, a process for producing it and a color display unit using it.

### BACKGROUND ART

With the arrival of the age of multimedia, the display unit which becomes core equipment of the digital network is demanded to have a large screen, high definition and the like. For the display unit, a device using a cathode ray tube (CRT) is conventionally used extensively. As to the CRT, hi-vision TVs, high-definition display tubes and the like have been developed, and the provision of large-screen and high-quality images, high definition and the like is under development.

As a thin-shaped display unit which is substitute for the CRT, a field emission type display unit (FED) using an electron emission element such as a field emission type cold cathode is being studied and developed. The FED has the same basic display principle as the CRT and has characteristics such as a wide viewing angle, a fast response speed and low power consumption in addition to the basic display performance such as brightness, contrast, color reproducibility, etc.

The above-described display units such as CRT and FED have a fluorescent screen including individual blue light-emitting, green light-emitting and red light-emitting fluorescent substances to allow full color display. As the blue light-emitting fluorescent substance and the green light-emitting fluorescent substance for a display unit, a zinc sulfide fluorescent substance which has zinc sulfide (ZnS) as the fluorescent substance matrix is generally used. For example, for the blue light-emitting fluorescent substance, a zinc sulfide fluorescent substance which has Ag contained as a first activator and Al or Cl contained as a second activator in zinc sulfide is used. For the green light-emitting fluorescent substance, a zinc sulfide fluorescent substance which has Cu or Au contained as a first activator and Al contained as a second activator in zinc sulfide is used.

Incidentally, the CRT is demanded to have high contrast in order to improve the display performance in addition to the provision of a large screen, high quality and high definition. Conventionally, the CRT is improved so as to have a large screen, high quality and high definition by the improvement of a residue characteristic (suppression of a residue produced when the fluorescent screen is formed) of the zinc sulfide fluorescent substance (Japanese Patent Laid-Open Application No. HEI 10-212475) or the improvement of current saturation characteristic of the zinc sulfide fluorescent substance (Japanese Patent Laid-Open Application No. HEI 7-188653), but not sufficiently remedied to have the contrast characteristic improved by virtue of the fluorescent screen itself.

For example, a high definition CRT has a high possibility that an undesired fluorescent substance (for example, an adjacent fluorescent substance) is caused to emit light by scattering or the like of an electron beam. If the undesired fluorescent substance is caused to emit light by an electron beam (low voltage electron beam) having low energy produced by scattering or the like, the contrast characteristic is adversely effected even by weak light. The unwanted light emission caused by the low-voltage electron beam is a significant problem for the blue light-emitting fluorescent substance and the green light-emitting fluorescent substance for which the zinc sulfide fluorescent substance is used.

Therefore, it is highly demanded that the unwanted light emission of the fluorescent substance, particularly the blue light-emitting fluorescent substance and the green light-emitting fluorescent substance, caused by the scattered electron beam (low voltage electron beam) or the like is suppressed so as to enhance the contrast characteristic of the display unit such as CRT. To improve the contrast characteristic of the CRT, a method of adhering a pigment to the fluorescent substance, a method of lowering reflectance of the front face of a panel and the like have been put into practice, but such methods cannot appropriately deal with the degradation of the contrast characteristic resulting from the provision of high definition to the CRT.

Besides, a current density of the electron beam which excites the fluorescent screen is increasing as the CRT has come to have a large screen, high quality, high definition and the like. For the FED, an electron beam having a high current density is also used for excitation of the fluorescent screen. As a result, it is demanded that the fluorescent substance configuring the fluorescent screen is improved its resistance to the electron beam having a high current density. In other words, it is demanded to suppress a deterioration in luminance resulting from the irradiation of the electron beam having a high current density. In response to such a demand, it is known that the deterioration in luminance due to the electron beam impact can be suppressed by changing the crystal structure of the zinc sulfide fluorescent substance from a cubic crystal to a hexagonal crystal.

For example, Japanese Patent Laid-Open Applications Nos. HEI 2-255791 and HEI 11-349937 describe a zinc sulfide fluorescent substance (ZnS:Ag, Al or ZnS:Ag, M, Al (M:Au, Cu)) for emission of blue light with 50% or more of a crystal structure determined as hexagonal crystal. Pamphlet of (PCT) International Publication No. WO-01/77254 describes that a blue light-emitting zinc sulfide fluorescent substance and a green light-emitting zinc sulfide fluorescent substance (ZnS:Cu, Al) have the crystal structure of a hexagonal crystal system.

The zinc sulfide fluorescent substance can suppress the luminance deterioration due to the impact of the electron beam having a high current density when its crystal structure is a hexagonal crystal, but there is a problem that a luminescent color is caused to shift toward a short wavelength side because of the crystal structure of the hexagonal crystal. The change in the luminescent color is conspicuous in the green light-emitting zinc sulfide fluorescent substance (ZnS:Cu, Al), and the luminescent color is shifted from green to blue. Thus, the luminescent color which is demanded for the green luminescent component for the display unit cannot be satisfied. Pamphlet of (PCT) International Publication No. WO-01/77254 describes that a shift of the luminescent color is corrected by adding Au to the green light-emitting ZnS:Cu, Al fluorescent substance, but a sufficient effect is not necessarily obtained.

Thus, the zinc sulfide fluorescent substance having the crystal structure of hexagonal crystal effective for suppression of the deterioration in luminance and the like caused by the electron beam of a high current density is desired to remedy the shift of the luminescent color toward the short wavelength side which results from having the hexagonal crystal for the crystal structure. The luminescent color change due to the crystal structure occurs prominently in the green light-emitting zinc sulfide fluorescent substance, so that it is highly demanded that the luminescent color of the green light-emitting zinc sulfide fluorescent substance is improved.

As to the fluorescent substance (fluorescent substance for a low voltage) to be used for a display unit which excites the fluorescent screen by an electron beam having a low acceleration voltage such as FED, there is a known technology that a fluorescent substance matrix (ZnS) is coated its surface with metal salt or metal oxide and thermally treated at temperatures of 400 to 800°C to dope the surface with an activator (see Japanese Patent No. 2914631). Here, the surface of the fluorescent substance matrix particles (ZnS particles) is doped with Mn, Cu, Au, Ag or the like as the activator.

The above-described activator doping technology is limited to enhancement of the luminous efficiency by an electron beam having a small penetration depth and not intended to suppress unwanted light emission which is caused by a low voltage electron beam of the zinc sulfide fluorescent substance or to improve a luminescent color which is caused by the crystal structure (hexagonal crystal) of the zinc sulfide fluorescent substance. And, it does not have a disclosure about the zinc sulfide fluorescent substance having the crystal structure of hexagonal crystal. In addition, the control of only the main activator (first activator) such as Cu or Au cannot improve the luminescent color of the zinc sulfide fluorescent substance which has the hexagonal crystal as the crystal structure.

The present invention provides a fluorescent substance for a display unit which remedies degradation in luminescent characteristic, which results from a large screen, high quality, high definition or the like of the display unit, a process of producing it, and a color display unit using it. More specifically, the present invention provides a fluorescent substance for display unit which has remedied the shift of the luminescent color of the zinc sulfide fluorescent substance resulting from the crystal structure of hexagonal crystal and a color display unit which has improved the display characteristics such as color reproducibility by using the fluorescent substance for display unit. Besides, the present invention provides a fluorescent substance for display unit which has suppressed unwanted light emission caused by a scattered electron beam and a color display unit which has improved the display characteristics such as a contrast characteristic and the like by using the fluorescent substance for display unit.

### SUMMARY OF THE INVENTION

The fluorescent substance for display unit of the present invention comprises fluorescent substance matrix particles; a first activator which is localized in a surface layer part of the fluorescent substance matrix particles; and a second activator which is uniformly dispersed in the fluorescent substance matrix particles. For the fluorescent substance for display unit of the present invention, the fluorescent substance matrix particles substantially formed of, for example, zinc sulfide is used, but it is not exclusive.

The fluorescent substance for display unit according to one embodiment of the present invention comprises the fluorescent substance matrix particles which are substantially formed of zinc sulfide having a crystal structure composed mainly of hexagonal crystal, the first activator is formed of at least one element selected from Cu and Au, and the second activator is formed of Al.

The fluorescent substance for display unit according to another embodiment of the present invention comprises the fluorescent substance matrix particles which are substantially formed of zinc sulfide having a crystal structure composed mainly of cubic crystal, and the first activator is formed of at least one element selected from Ag, Cu and Au and the second activator is formed of at least one element selected from Al and Cl.

The color display unit of the present invention comprises a fluorescent screen which contains a blue light-emitting fluorescent substance, a green light-emitting fluorescent substance and a red light-emitting fluorescent substance and has the fluorescent substance for display unit of the present invention as at least one element of the individual light-emitting fluorescent substances; an electron source which irradiates an electron beam to the fluorescent screen to emit light; and an envelope which vacuum-seals the electron source and the fluorescent screen.

The color display unit according to one embodiment of the present invention comprises the fluorescent substance for display unit of the present invention as a green light-emitting fluorescent substance which configures the fluorescent screen. The color display unit according to another embodiment has the fluorescent substance for display unit of the present invention as at least either of the blue light-emitting fluorescent substance and the green light-emitting fluorescent substance which configure the fluorescent screen.

### BRIEF DESCRIPTION OF THE DRAWINGS

Fig. 1 is a view schematically showing a structure of the fluorescent substance for display unit according to a first embodiment of the present invention.
Fig. 2 is a view showing a distributed state of a first activator of the fluorescent substance for display unit shown in Fig. 1.
Fig. 3 is a sectional view showing a schematic structure of the field emission type display unit according to one embodiment of the color display unit of the present invention.
Fig. 4 is a sectional view showing a schematic structure of the color cathode ray tube according to another embodiment of the color display unit of the present invention.
Fig. 5 is a view showing a relationship between an excitation voltage and emission luminance of the blue light-emitting fluorescent substance according to one example of the present invention.
Fig. 6 is a view showing a relationship between an excitation voltage and emission luminance of the green light-emitting fluorescent substance (ZnS:Cu, Al fluorescent substance) according to another example of the present invention.
Fig. 7 is a view showing a relationship between an excitation voltage and emission luminance of the green light-emitting fluorescent substance (ZnS:Cu, Au, Al fluorescent substance) according to still another example of the present invention.
Fig. 8 is a view illustrating a measuring method of a contrast characteristic of a color cathode ray tube.

### BEST MODE FOR IMPLEMENTING THE INVENTION

Modes of conducting the present invention will be described with reference to the drawings.

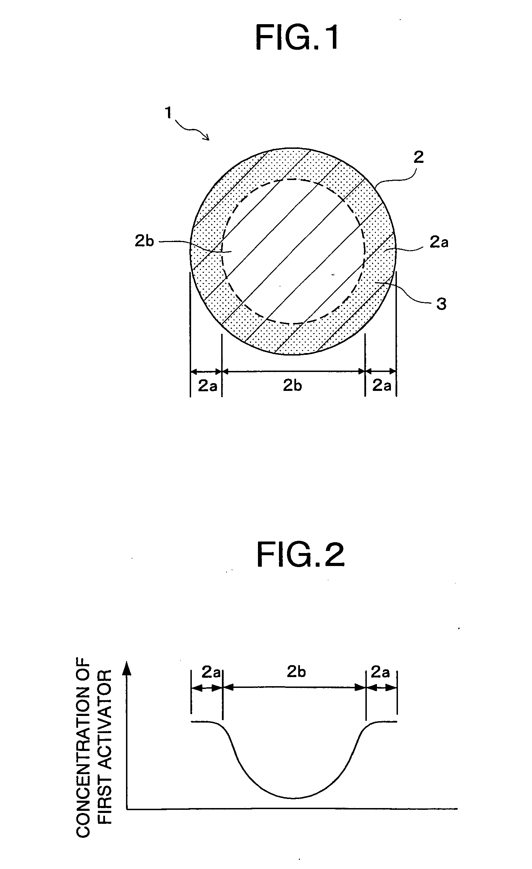

First, a first embodiment of the present invention will be described. Fig. 1 shows schematically an outline structure of a fluorescent substance for display unit according to the first embodiment of the present invention. As shown in Fig. 1, a fluorescent substance for display unit 1 of the first embodiment has zinc sulfide particles 2 as fluorescent substance matrix particles. An unshown second activator is uniformly dispersed in the zinc sulfide particles 2 which are the fluorescent substance matrix particles. Besides, a surface layer part 2a of the zinc sulfide particles 2 is locally doped with a first activator 3. Thus, the fluorescent substance for display unit 1 of the first embodiment is configured.

In the fluorescent substance for display unit 1 of the first embodiment, the zinc sulfide particles 2 configuring the fluorescent substance matrix have a crystal structure composed mainly of hexagonal crystal. A zinc sulfide fluorescent substance of a hexagonal crystal system has outstanding resistance to deterioration on the basis of its crystal structure, so that even if an electron beam having, for example, a high current density is repeatedly irradiated, it can suppress luminance deterioration and the like with time due to an irradiation impact by the electron beam.

In order to obtain an effect of suppressing the luminance deterioration resulting from the electron beam impact, it is desirable that a ratio of hexagonal crystal in the zinc sulfide crystal structure is 50% or more. If the ratio of the hexagonal crystal is less than 50%, favorable impact resistance against the electron beam cannot be obtained. The ratio of the hexagonal crystal in the crystal structure is preferably 80% or more and more preferably 95% or more. Especially, it is desirable that substantially the entire crystal structure of the zinc sulfide is a hexagonal crystal.

Here, the crystal structure of the zinc sulfide fluorescent substance can be measured by generally used X-ray diffraction. Specifically, the hexagonal crystal system has a peak on a (100) plane and on a (002) plane for the X-ray diffraction peak, while the cubic crystal system has a peak on a (111) plane. It can be checked whether the zinc sulfide fluorescent substance has the crystal structure of hexagonal crystal according to the crystal direction in that the peak appears. Specifically, an amorphous glass sample casing (plate shape) having recesses of about 0.5 mm is used, fluorescent substance powder is filled in the recesses, the surface is smoothened to be flat, and X rays are irradiated. Thus, the measurement can be made using a small amount of sample.

The fluorescent substance for display unit 1 of the first embodiment is a zinc sulfide fluorescent substance which emits green or blue light when an electron beam having an acceleration voltage of, for example, 5 to 35 kV is irradiated. This fluorescent substance for display unit 1 can be provided with a desired luminescent color depending on a type and amount of the activator to be contained in the zinc sulfide particles 2 as the fluorescent substance matrix. For example, by containing Cu, Au or the like as the first activator and Al or the like as the second activator, a green light-emitting zinc sulfide fluorescent substance 1 can be provided.

A specific example of the green light-emitting zinc sulfide fluorescent substance 1 is a fluorescent substance having a composition represented substantially by a general formula:

ZnS:Cuₐ, Al_{b}

(where, a and b each represent amounts in ranges of 1×10⁻⁵ ≤ a ≤ 1×10⁻³ g and 1×10⁻⁵ ≤ b ≤ 5×10⁻³ g with respect to 1g of zinc sulfide which is a fluorescent substance matrix). Cu may be partly substituted by Au.

Cu is the first activator (main activator) which forms luminescence center and preferably contained in a range of 1×10⁻⁵ to 1×10⁻³ g with respect to 1g of zinc sulfide which is a fluorescent substance matrix. If a content of the first activator is less than 1×10⁻⁵ g or larger than 1×10⁻³ g with respect to 1g of zinc sulfide, the emission luminance and emission chromaticity are deteriorated. The content of the first activator is preferably in a range of 3×10⁻⁵ to 8×10⁻⁴ g with respect to 1g of zinc sulfide, and more preferably in a range of 5×10⁻⁵ to 5×10⁻⁴ g.

Al is the second activator (coactivator) which is excited by an electron beam. Emission luminance of the zinc sulfide fluorescent substance can be enhanced by causing the first activator to emit light by the excitation energy of the second activator. A content of the second activator is preferably in a range of 1×10⁻⁵ to 5×10⁻³ g with respect to 1g of zinc sulfide which is the fluorescent substance matrix. The emission luminance lowers and the emission chromaticity also deteriorates if the content of the second activator is less than 1×10⁻⁵ g or larger than 5×10⁻³ g with respect to 1g of zinc sulfide. The content of the second activator is more preferably in a range of 3×10⁻⁵ to 3×10⁻³ g and most preferably in a range of 5×10⁻⁵ to 1×10⁻³ g with respect to 1g of zinc sulfide.

In the above-described zinc sulfide particles (fluorescent substance matrix particles) 2 having the crystal structure composed mainly of hexagonal crystal, the second activator of Al or the like is contained in a uniformly dispersed state. Here, the state that the second activator is uniformly dispersed into the zinc sulfide particles 2 shall indicate a state that a concentration distribution is substantially constant when the second activator concentration (concentration distribution in a direction below the surface) within the zinc sulfide particles 2 is measured. Such a state can be obtained by mixing uniformly a material for forming zinc sulfide as the fluorescent substance matrix and a material for forming the second activator and firing the mixture.

The surface layer part 2a of the zinc sulfide particles 2 is selectively doped with the first activator 3 such as Cu or Au. Thus, the first activator 3 is localized in the surface layer part 2a of the zinc sulfide particles 2 as shown in Fig. 1. The state that the first activator 3 is localized in the surface layer part 2a of the zinc sulfide particles 2 (a state of localization in the surface layer part 2a) indicates a state that the concentration of the first activator 3 is high in the surface layer part 2a in comparison with an interior 2b of the zinc sulfide particles (fluorescent substance matrix particles) 2 as shown in Fig. 2. Fig. 2 shows a state that the first activator 3 is present somewhat in the interior 2b of the zinc sulfide particles 2 but it is preferable that the first activator 3 is inherently present in the surface layer part 2a only.

The surface layer part 2a in which the first activator 3 is localized is not specified to have a particular thickness, but it is preferable that the localization is in a range of, for example, up to 2 µm from the surface in the depth direction of the zinc sulfide particles 2. If the thickness of the surface layer part 2a exceeds 2 µm, there is a possibility that the effect of the localization of the first activator 3 described later on the side of the particle surface cannot be obtained adequately. The above-described first activator content indicates a value that the amount of the first activator localized in the particle surface layer part 2a is averaged by a total mass of the zinc sulfide particles 2.

As described above, the second activator to be excited by the electron beam is uniformly dispersed into the zinc sulfide particles 2 as the fluorescent substance matrix. Then, the first activator 3, which forms the luminescence center, is localized in the surface layer part 2a of the zinc sulfide particles 2, so that a shift of the luminescent color toward the short wavelength side which is caused because the crystal structure of zinc sulfide to be the fluorescent substance matrix was determined to be hexagonal crystal can be corrected. In other words, emission chromaticity having, for example, CIE chromaticity values (x, y) of (0.24±0.03, 0.6±0.03) which are required for the green luminescent component for the color display unit can be obtained stably.

The emission chromaticity of the ZnS:Cu, Al fluorescent substance of the cubic crystal system is, for example, CIE chromaticity values (x, y)=(0.264, 0.620). Meanwhile, the emission chromaticity of the ZnS:Cu, Al fluorescent substance of a conventional hexagonal crystal system has (x, y)=(0.195, 0.528) and cannot adequately meet the luminescent characteristic as the green luminescent component. The emission chromaticity can be satisfied as the above-described green light emission by localizing Cu, which is in the ZnS:Cu, Al fluorescent substance of the hexagonal crystal system, in the surface layer part 2a of the zinc sulfide particles 2 as the fluorescent substance matrix.

In other words, a shift of the luminescent color toward the short wavelength side (blue side) by determining the crystal structure of zinc sulfide as the hexagonal crystal is corrected by localizing the first activator which becomes the luminescence center in the particles surface layer part. This is based on the excessive presence of the first activator which has an effect on the emission chromaticity of the zinc sulfide fluorescent substance in the particle surface layer part 2a which is directly involved in the light emission. Thus, it becomes possible to provide ZnS:Cu, Al fluorescent substance of the hexagonal crystal system that the emission chromaticity which is required for the green luminescent component can be obtained stably.

Here, the shift of the luminescent color toward the short wavelength side (blue side) can also be corrected by increasing the content of the first activator which becomes the luminescence center. But, it induces concentration quenching, and the luminous efficiency is greatly decreased. On the other hand, where the second activator is uniformly dispersed in the zinc sulfide particles 2 as the fluorescent substance matrix and only the first activator which becomes the luminescence center is localized in the particle surface layer part 2a, the concentration quenching can be suppressed, and the shift of the luminescent color toward the short wavelength side (blue side) can be corrected.

According to the fluorescent substance for display unit of the first embodiment, it becomes possible to provide a zinc sulfide fluorescent substance (especially, green light-emitting fluorescent substance) excelling in luminous efficiency and emission chromaticity (especially, the emission chromaticity which is demanded for the green luminescent component) with resistance to the electron beam impact improved when the crystal structure of zinc sulfide as the fluorescent substance matrix is determined as the hexagonal crystal. In other words, even when it is used for a color display unit which is excited by an electron beam having a high current density or the like, it becomes possible to satisfy the luminescent color (especially, the emission chromaticity as the green luminescent component) which is required for the fluorescent substance for the color display unit upon suppressing the luminance deterioration of the zinc sulfide fluorescent substance with time.

The fluorescent substance for display unit 1 of the first embodiment is not necessarily limited to the green light-emitting zinc sulfide fluorescent substance but may be applied to, for example, a blue light-emitting zinc sulfide fluorescent substance. For example, the blue light-emitting zinc sulfide fluorescent substance can be obtained by containing Ag as the first activator into the zinc sulfide as the fluorescent substance matrix and also containing at least one element selected from Al and Cl as the second activator. In this blue light-emitting zinc sulfide fluorescent substance, the luminescent color can be improved by localizing the first activator in the surface layer part of the zinc sulfide particles of the hexagonal crystal system.

For example, the above-described fluorescent substance for display unit of the first embodiment is produced as follows. First, a prescribed amount of second activator raw material is added to a zinc sulfide raw material which is a fluorescent substance matrix, and flux such as potassium chloride or magnesium chloride is also added as required. They are wet blended. Specifically, a raw material for the fluorescent substance is dispersed into an ion exchange water to prepare a slurry, and a second activator raw material and flux are added to it. They are mixed by a stirrer of a conventional method. Mixing time is set such that the second activator is dispersed uniformly.

Then, the slurry containing the raw material for the fluorescent substance and the second activator is put into a drying vessel and dried by a dryer of a conventional method to obtain a raw material for the fluorescent substance. The raw material for the fluorescent substance is charged into a heat-resistant vessel such as a quartz crucible together with appropriate amounts of sulfur and activated carbon. At that time, the sulfur is mixed with the dried raw material for the fluorescent substance by a blender or the like for about 30 to 180 minutes for example. The mixed raw material is charged into a heat-resistant vessel, and its surface is desirably covered.

The above-described mixed raw material is fired in a sulfurizing atmosphere such as a hydrogen sulfide atmosphere, a sulfur vapor atmosphere or the like or in a reducing atmosphere (for example, an atmosphere of 3 to 5% of hydrogen and the rest nitrogen). The firing conditions are significant in order to control the crystal structure of the fluorescent substance matrix (ZnS), and the firing temperature is desirably set to a range of 1020 to 1150°C to obtain a target crystal structure of hexagonal crystal.

The zinc sulfide fluorescent substance of the hexagonal crystal system can be obtained when the firing temperature is set to a range of 1020 to 1150°C. If the firing temperature is less than 1020°C, the ratio of the cubic crystal in the crystal increases. Meanwhile, if the firing temperature exceeds 1150°C, the crystal particles grow excessively, and it becomes hard to form a dense luminescent surface. Firing time is desirably 30 to 360 minutes depending on the determined firing temperature. If the firing time is too short, mixed crystal of hexagonal crystal and cubic crystal might be formed. Cooling after the firing step is desirably conducted quickly in order to prevent a phase change from the hexagonal crystal to the cubic crystal.

Then, the obtained fired product is washed with water such as an ion exchange water and dried. If necessary, sieving or the like is performed in order to remove coarse particles. Zinc sulfide (for example, ZnS:Al) powder having the second activator dispersed uniformly is obtained through the above steps. Then, the surface layer part 2a of the zinc sulfide particles 2 is doped with the first activator. For example, the first activator doping step is conducted as follows.

Specifically, the zinc sulfide powder having the uniformly dispersed second activator is dispersed into ionexchange water to prepare a slurry, to which a prescribed amount of the first activator raw material is added, and they are mixed by a stirrer of a conventional method. Mixing time is advisably set to, for example, about 10 to 30 minutes such that the first activator raw material is adequately dispersed and finely adhered to the surface of the zinc sulfide particles. Thus, the zinc sulfide particles and the first activator raw material are wet blended into a slurry, which is then put into a drying vessel and dried by a drier of a conventional method at, for example, 130°C for about 20 hours.

And, the zinc sulfide powder (zinc sulfide powder containing the second activator) which has the first activator raw material adhered to the surface is fired in, for example, a sulfuric atmosphere such as a hydrogen sulfide atmosphere or a sulfur vapor atmosphere or a reducing atmosphere. By firing in the state that the first activator raw material is adhered to the surface, the first activator can be doped to only the surface layer part of the zinc sulfide particles. The firing conditions are preferably determined in the same way as the firing conditions of the above-described raw material for the fluorescent substance (a mixture of zinc sulfide and the second activator) so that the crystal structure of zinc sulfide which is the fluorescent substance matrix keeps the hexagonal crystal.

Subsequently, the obtained fired product is sufficiently washed with an ion exchange water or the like, dried (for example, at 120°C for 20 hr) and, if necessary, sieving or the like is performed to remove coarse particles. Through the described steps, a target zinc sulfide fluorescent substance (e.g., ZnS:Cu, Al fluorescent substance) of the hexagonal crystal system can be obtained. According to the above-described firing step, the second activator is uniformly dispersed into the fluorescent substance matrix, and the first activator can be localized in the surface layer part of the fluorescent substance matrix particles.

The fluorescent substance for display unit of the first embodiment is applied to a color display unit which uses, for example, an electron beam having an acceleration voltage in a range of, for example, 5 to 35 kV as the fluorescent substance exciting source. Examples of the color display unit include a color cathode ray tube (color CRT), a field emission type display unit (FED) and the like. Where the fluorescent substance for display unit of the first embodiment is used for a color FED, luminance deterioration or the like by an electron beam having a high current density is suppressed, and color reproducibility can be improved.

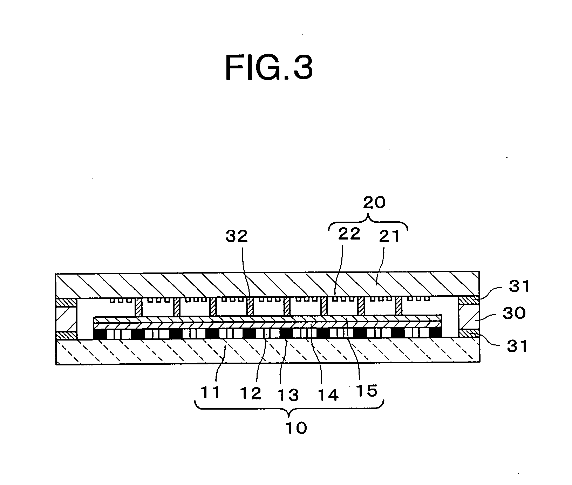

Fig. 3 is a sectional view showing the structure of a main portion of a color FED to which the fluorescent substance for display unit of the first embodiment is applied. Fig. 3 shows one embodiment that the color display unit of the present invention is applied to a color FED. In Fig. 3, 10 denotes a face plate, which has a fluorescent substance layer 12 formed on a transparent substrate such as a glass substrate 11. The fluorescent substance layer 12 has a layer including a blue light-emitting fluorescent substance, a green light-emitting fluorescent substance and a red light-emitting fluorescent substance which are formed in correspondence with pixels and has a structure that they are separated by a black conductive material 13.

Among the individual color fluorescent substances configuring the fluorescent substance layer 12, at least the green light-emitting fluorescent substance is formed of the fluorescent substance for display unit of the first embodiment. The fluorescent substance layer 12 which emits blue, green and red light and the black conductive material 13 which separates them are alternately formed in a horizontal direction. The region having the fluorescent substance layer 12 and the black conductive material 13 forms an image display region. Various types of configurations can be applied to the arrangement structure of the fluorescent substance layer 12 and the black conductive material 13.

A metal back layer 14 is formed on the fluorescent substance layer 12. The metal back layer 14 is formed of a conductive thin film such as an Al film. The metal back layer 14 reflects light, which travels in a direction of a rear plate 20 which becomes an electron source, in the light generated by the fluorescent substance layer 12 to improve the luminance. Besides, the metal back layer 14 has a function to give conductivity to the image display region of the face plate 10 to prevent an electric charge from being accumulated and serves as an anode electrode for an electron source of the rear plate 20.

And, the metal back layer 14 has a function to prevent the fluorescent substance layer 12 from being damaged by an ion generated when the gas remaining in the face plate 10 or the vacuum vessel (envelope) is ionized by the electron beam. The metal back layer 14 also has effects to prevent the gas, which is generated from the fluorescent substance layer 12 during use, from being discharged into the vacuum vessel (envelope) and to prevent a degree of vacuum from lowering. A getter film 15 which is formed of an evaporative getter material such as Ba or the like is formed on the metal back layer 14. The gas generated during use is efficiently absorbed by the getter film 15.

The rear plate 20 has a substrate 21, which is formed of an insulating substrate such as a glass substrate or a ceramics substrate, or an Si substrate or the like, and a large number of electron emission elements 22 which are formed on the substrate 21. These electron emission elements 22 are provided with, for example, field emission type cold cathodes, surface conduction type electron emission elements and the like. Unshown wiring is disposed on the surface of the rear plate 20 where the electron emission elements 22 are formed. The plural electron emission elements 22 are formed in matrix in accordance with the fluorescent substances of the individual pixels and have mutually intersecting wires (X-Y wires) for driving each row of the matrix electron emission elements 22.

A support frame 30 hermetically seals the space between the face plate 10 and the rear plate 20. The support frame 30 is joined to the face plate 10 and the rear plate 20 with a joining material 31 of flit glass, In or an alloy of them interposed between them. Thus, the vacuum vessel as an envelope is configured of the face plate 10, the rear plate 20 and the support frame 30.

The support frame 30 is provided with an unshown signal input terminal and row selection terminal. These terminals correspond to the intersecting wires (X-Y wires) of the rear plate 20. Support members 32 formed of, for example, an insulating member may be arranged between the face plate 10 and the rear plate 20. Thus, deformation of the vacuum vessel due to the atmospheric pressure or the like and deterioration of the image resolution resulting from the deformation can be suppressed.

In the color FED shown in Fig. 3, the fluorescent substance for display unit (zinc sulfide fluorescent substance having the crystal structure of a hexagonal crystal system) of the first embodiment is used as a green luminescent component of the fluorescent substance layer 12 which emits light by the irradiation of the electron beam. For the blue light-emitting fluorescent substance and the red light-emitting fluorescent substance, various types of known fluorescent substances can be used. By using this color FED, display characteristics such as initial luminance, color reproducibility and the like can be improved on the basis of the characteristics of the fluorescent substance for display unit according to the first embodiment.

The fluorescent substance for display unit of the first embodiment is also effective for a color CRT and the like, which are increased a current density of the electron beam, with the provision of a large screen, high quality, high definition and the like. In this case, luminance deterioration due to the electron beam having a high current density is suppressed, and it becomes possible to improve color reproducibility and the like. A specific configuration of the color CRT will be described later. The color FED shown in Fig. 3 and a color CRT described later show embodiments of the color display unit of the present invention and use the fluorescent substance for display unit (zinc sulfide fluorescent substance) of the first embodiment as at least the green light-emitting fluorescent substance.

Then, a second embodiment of the present invention will be described. The fluorescent substance for display unit of the second embodiment has zinc sulfide particles, in which the second activator is uniformly dispersed, as fluorescent substance matrix particles in the same manner as in the first embodiment. Besides, the first activator is locally doped to the surface layer part of the zinc sulfide particles as the fluorescent substance matrix particles. The first activator and the second activator are present basically in the same state as in the first embodiment, and the first activator is localized in the surface layer part of the zinc sulfide particles as shown in Fig. 1.

It is desirable that the zinc sulfide particles of the second embodiment have a crystal structure composed mainly of cubic crystal in view of the emission luminance and emission chromaticity of the fluorescent substance for display unit. It is desirable that the crystal structure composed mainly of cubic crystal has the zinc sulfide as the cubic crystal in the crystal structure at a ratio of 50% or more. The ratio of the cubic crystal in the crystal structure is preferably 80% or more, and more preferably 95% or more. It is especially desirable that substantially the whole of crystal structure of zinc sulfide is cubic crystal. The crystal structure of the zinc sulfide fluorescent substance can be measured by the X-ray diffraction as described above.

The fluorescent substance for display unit of the second embodiment is a zinc sulfide fluorescent substance which emits light in, for example, blue or green when the electron beam of an acceleration voltage of, for example, 5 to 35 kV is irradiated. This fluorescent substance for display unit can obtain a desired luminescent color depending on a type and amount of the activator contained as the fluorescent substance matrix in zinc sulfide. For example, by containing Ag as the first activator and Al or C1 as the second activator, a blue light-emitting zinc sulfide fluorescent substance can be provided. And, by containing Cu or Au as the first activator and Al as the second activator, a green light-emitting zinc sulfide fluorescent substance can be provided.

Specific examples of the blue light-emitting zinc sulfide fluorescent substance include a fluorescent substance which has a composition substantially represented by a general formula:

ZnS:Ag_{c}, M_{d}

(where, M denotes at least one element selected from Al and Cl, and c and d denote amounts in ranges of 1×10⁻⁵ ≤ c ≤ 2×10⁻³ g and 1×10⁻⁵ ≤ d ≤ 5×10⁻³ g with respect to 1g of zinc sulfide which is a fluorescent substance matrix).

Ag is a first activator (main activator) which forms luminescence center and desirably contained in a range of 1×10⁻⁵ to 2×10⁻³ g with respect to 1g of zinc sulfide which is a fluorescent substance matrix. If the content of the first activator is less than 1×10⁻⁵ g or larger than 2×10⁻³ g with respect to 1g of zinc sulfide, the emission luminance and emission chromaticity deteriorate. The content of the first activator is more preferably in a range of 3×10⁻⁵ to 1.5×10⁻³ g, and most preferably in a range of 5×10⁻⁵ to 1×10⁻³ g with respect to 1g of zinc sulfide.

Al or Cl is a second activator (coactivator) to be excited by the electron beam. The emission luminance of the zinc sulfide fluorescent substance can be enhanced by causing the first activator to emit light by the excitation energy of the second activator. The second activator content is preferably in a range of 1×10⁻⁵ to 5×10⁻³ g with respect to 1g of zinc sulfide which is the fluorescent substance matrix. If the second activator content is less than 1×10⁻⁵ g or larger than 5×10⁻³ g with respect to 1g of zinc sulfide, the emission luminance deteriorates and the emission chromaticity also deteriorates. The second activator content is more preferably in a range of 5×10⁻⁵ to 2×10⁻³ g and most preferably in a range of 1×10⁻⁴ to 1×10⁻³ g with respect to 1g of zinc sulfide.

A specific example of the green light-emitting zinc sulfide fluorescent substance is a fluorescent substance having a composition represented substantially by a general formula:

ZnS:Cuₑ, Au_{f}, Al_{g}

(where, e, f and g each represent amounts in ranges of 1×10⁻⁵ ≤ e ≤ 1×10⁻³ g, 0 ≤ f ≤ 2×10⁻³ g, 1×10⁻⁵ ≤ e+f ≤ 2×10⁻³ g, 1×10⁻⁵ ≤ g ≤ 5×10⁻³ g with respect to 1g of zinc sulfide which is the fluorescent substance matrix).

Cu or Au is a first activator (main activator) which forms luminescence center. It is preferable that Cu is contained in a range of 1×10⁻⁵ to 1×10⁻³ g, and Au is contained in a range of 0 to 2×10⁻³ g with respect to 1g of zinc sulfide which is the fluorescent substance matrix. If the first activator content is not within the above-described range, the emission luminance and emission chromaticity deteriorate. For the green light-emitting zinc sulfide fluorescent substance, either of Cu or a combination of Cu and Au is applied as the first activator. Where the combination of Cu and Au is applied, their total amount is adjusted to a range of 1×10⁻⁵ to 2×10⁻³ g.

The Cu content as the first activator is more preferably in a range of 3×10⁻⁵ to 5×10⁻⁴ g, and most preferably in a range of 5×10⁻⁵ to 3×10⁻⁴ g with respect to 1g of zinc sulfide which is the fluorescent substance matrix. And, the Au content as the first activator is more preferably in a range of 5×10⁻⁵ to 1.5×10⁻³ g and most preferably in a range of 1×10⁻⁴ to 1×10⁻³ g with respect to 1g of zinc sulfide. Besides, a total amount of Cu and Au is more preferably in a range of 5×10⁻⁵ to 1.5×10⁻³ g and most preferably in a range of 1×10⁻⁴ to 1×10⁻³ g with respect to 1g of zinc sulfide.

Al is a second activator (coactivator) which is excited by the electron beam. The emission luminance of the zinc sulfide fluorescent substance can be enhanced by causing the first activator to emit light by excitation energy of the second activator. The second activator content is preferably adjusted to a range of 1×10⁻⁵ to 5×10⁻³ g with respect to 1g of zinc sulfide which is the fluorescent substance matrix. If the second activator content is less than 1×10⁻⁵ g or larger than 5×10⁻³ g with respect to 1g of zinc sulfide, the emission luminance deteriorates, and the emission chromaticity deteriorates too. The second activator content is more preferably in a rang of 5×10⁻⁵ to 2×10⁻³ g and most preferably in a range of 1×10⁻⁴ to 1×10⁻³ g with respect to 1g of zinc sulfide.

In the fluorescent substance for display unit comprising the above-described zinc sulfide fluorescent substance having the crystal structure of cubic crystal, the second activator such as Al or Cl is uniformly dispersed in the fluorescent substance matrix particles in the same manner as in the first embodiment. And, the surface layer part of the fluorescent substance matrix particles is selectively doped with the first activator such as Ag, Cu, Au or the like in the same manner as in the first embodiment shown in Fig. 1. Thus, the first activator is localized in the surface layer part of the fluorescent substance matrix particles. The state that the first activator is localized in the surface layer part of the fluorescent substance matrix particles and the thickness of the surface layer part are same as in the first embodiment.

The second activator which is excited by the electron beam is dispersed uniformly into the fluorescent substance matrix particles, and the first activator which forms the luminescence center is localized in the surface layer part of the fluorescent substance matrix particles. Thus, unwanted light emission by the electron beam on the low voltage side can be suppressed. In other words, the low voltage electron beam which is generated by scattering or the like has a small depth of entering into the fluorescent substance particles, so that energy is released in the particle surface layer part where the first activator is localized. Therefore, concentration quenching is caused by the excessively present first activator, and the emission luminance can be lowered.

And, the penetration depth of the electron beam into the fluorescent substance particles becomes deep as the voltage of the electron beam rises, so that the energy of the electron beam is released in the fluorescent substance particles. Therefore, when the electron beam (electron beam on the high voltage side) having an original set voltage is irradiated, an influence of the concentration quenching is reduced, and emission luminance is improved.

In addition, the second activator which is excited by the electron beam is dispersed uniformly into the fluorescent substance matrix particles, and the first activator which is excessively present in the particle surface layer part is caused to emit light by the excitation energy of the second activator. Thus, the luminous efficiency by the electron beam having the set voltage can be enhanced. It is also susceptible to the first activator content, so that it is desirable that the first activator content is adjusted to improve the luminous efficiency by the original electron beam on the high voltage side while the luminous efficiency by the electron beam on the low voltage side is suppressed.

Thus, unwanted light emission by the electron beam on the low voltage side caused by scattering or the like can be suppressed by the fluorescent substance for display unit of the second embodiment. Besides, original luminous efficiency by the electron beam on the high voltage side can be improved. The suppression of the unwanted light emission by the electron beam on the low voltage side contributes greatly to the provision of the color display unit with high contrast. The improvement of the luminous efficiency by the electron beam on the high voltage side contributes to the provision of the color display unit with high contrast, high definition, high quality and the like. In other words, for example, the blue light-emitting or the green light-emitting zinc sulfide fluorescent substance can be provided with both high contrast and high luminance by the fluorescent substance for display unit of the second embodiment.

The fluorescent substance for display unit applying zinc sulfide to the fluorescent substance matrix was described in the second embodiment. The present invention is not limited to that but can also be applied to a fluorescent substance for display unit which has the fluorescent substance matrix formed of another compound. For a fluorescent substance with the combined use of the first activator and the second activator, unwanted light emission by the electron beam on the low voltage side can be suppressed by dispersing uniformly the second activator into the fluorescent substance matrix particles and localizing the first activator which forms the luminescence center in the surface layer part of the fluorescent substance matrix particles.

For example, the fluorescent substance for display unit of the second embodiment is produced as follows. First, zinc sulfide raw material which is fluorescent substance matrix, a prescribed amount of second activator raw material and flux such as potassium chloride or magnesium chloride if necessary are mixed in the same manner as in the first embodiment. These raw materials for the fluorescent substance are charged in a heat-resistant vessel together with appropriate amounts of sulfur and activated carbon. They are fired in a sulfuric atmosphere such as a hydrogen sulfide atmosphere or a sulfur vapor atmosphere or a reducing atmosphere (for example, an atmosphere of 3 to 5% hydrogen and the rest of nitrogen).

The firing conditions are significant to control the crystal structure of the fluorescent substance matrix (ZnS). To obtain a target crystal structure composed mainly of cubic crystal, a firing temperature is preferably in a range of 800 to 1020°C. If the firing temperature is lower than 800°C, zinc sulfide crystal particles cannot be grown adequately. Meanwhile, if the firing temperature becomes 1020°C or more, for example hexagonal crystal grows, and a ratio of the cubic crystal lowers relatively. It is desirable that the firing time is set to 30 to 360 minutes depending on the determined firing temperature.

Then, the fired product is washed with water and dried and, if necessary, sieved in the same manner as in the first embodiment to obtain zinc sulfide powder in which the second activator is uniformly dispersed. Then, the surface layer part of the zinc sulfide particles is doped with the first activator. The first activator doping step is performed by adhering the first activator raw material to the surface of the zinc sulfide particles (zinc sulfide particles containing the second activator) and firing in the same manner as in the first embodiment. Thus, the surface layer part of the zinc sulfide particles is doped with the first activator. The firing conditions in this case are same as the firing conditions for the above-described fluorescent substance such that the crystal structure of the zinc sulfide keeps the cubic crystal.

Subsequently, the obtained fired product is washed sufficiently with an ion exchange water or the like and dried (for example, at 120°C for 20 hr), and if necessary, sieving or the like is performed to remove coarse particles. Through the above-described steps, the second activator is uniformly dispersed into the fluorescent substance matrix particles, and the zinc sulfide fluorescent substance (for example, ZnS:Ag, Al fluorescent substance, ZnS:Cu, Al fluorescent substance, etc.) which has the first activator localized into the surface layer part of the fluorescent substance matrix particles can be obtained.

The fluorescent substance for display unit of the second embodiment is applied to a color display unit which uses an electron beam with an acceleration voltage in a range of 5 to 35 kV as, for example, a fluorescent substance exciting source. Examples of the color display unit include a color cathode ray tube (color CRT). Especially, the fluorescent substance for display unit of the second embodiment is suitable for a color display unit which uses an electron beam having an acceleration voltage of 8 kV or more or a color display unit which uses an electron beam having an acceleration voltage of 10 kV or more because the luminous efficiency on the low voltage side is lowered. When the fluorescent substance for display unit of the second embodiment is applied to a CRT, the contrast of displayed images is enhanced, and it becomes possible to provide high definition and high quality.

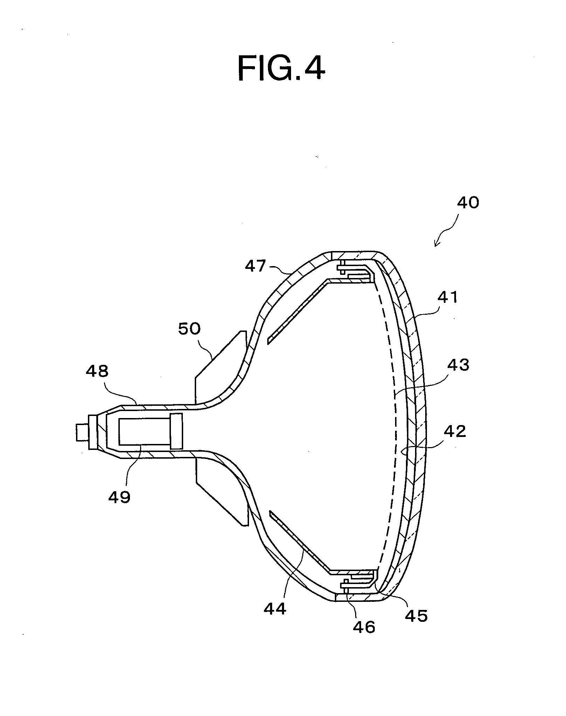

Fig. 4 is a sectional view showing the structure of a main portion of a color CRT to which the fluorescent substance for display unit of the second embodiment is applied. Fig. 4 shows one embodiment that the color display unit of the present invention is applied to a color CRT. A color CRT 40 shown in Fig. 4 has as a face plate a glass panel 41 which is formed of soft glass or the like. A fluorescent screen 42 is formed on the inner surface of the glass panel 41.

The fluorescent screen 42 has a shape having a red light-emitting fluorescent substance, a green light-emitting fluorescent substance and a blue light-emitting fluorescent substance arranged in a dot shape or a stripe shape. The dot-shaped fluorescent screen is effective for a color CRT (CDT) used for a computer display. The stripe-shaped fluorescent screen is effective for a color CRT (CPT) to be used for a color television.

A shadow mask 43 is disposed in the inside of the glass panel 41 to face the fluorescent screen 42, which is formed on the inner surface of the glass panel 41, with a prescribed gap between them. The shadow mask 43 is formed a large number of unshown fine pores or slits. The shadow mask 43 is supported by panel pins 46, which are fixed for sealing to the vicinity of the opening of the glass panel 41, via mask frames 44 and frame holders 45.

Besides, a neck section 48 is connected to the glass panel 41 via a funnel section 47 to configure a glass bulb as an envelope. An electron gun 49 is positioned as an electron source within the neck section 48. Electron beams emitted from the electron gun 49 are scanned by a deflection yoke 50 or the like, passed in that state through the fine pores or slits of the shadow mask 43 and irradiated to the fluorescent screen 42.

In the color CRT 40 shown in Fig. 4, the zinc sulfide fluorescent substance of the second embodiment is used as at least one of the blue light-emitting fluorescent substance and the green light-emitting fluorescent substance of the fluorescent screen 42 which emit light by the irradiation of the electron beam. Various types of known fluorescent substances can be used for the red light-emitting fluorescent substance. The color CRT 40 applies the zinc sulfide fluorescent substance of the second embodiment, which has provided both the high contrast and the high luminance, to the blue light-emitting fluorescent substance and the green light-emitting fluorescent substance. Therefore, the display characteristics (a large screen, high quality, high definition, high contrast, etc.) can be improved based on it.

In the color CRT 40 shown in Fig. 4, the fluorescent substance for display unit of the first embodiment may be used as, for example, the green light-emitting fluorescent substance. Such a color CRT is effective to provide a large screen, high quality, high definition and the like. In other words, color reproducibility can be improved based on the properties of the fluorescent substance for display unit of the first embodiment while suppressing the deterioration or the like of the luminance caused by the electron beam having a high current density.

Then, specific examples of the present invention will be described.

### Example 1

First, to 1000g of zinc sulfide (ZnS) were added 13.5g of aluminum nitrate (Al(NO₃)₃•9H₂O) and an appropriate amount of water. They were mixed sufficiently and dried. To the prepared raw material for a fluorescent substance were added sulfur and activated carbon in appropriate amounts, and they were charged in a quartz crucible and fired in a reducing atmosphere. The firing conditions were 1100°C×60 minutes.

Then, the above-described fired product was washed with water and dried, then sieved to obtain ZnS:Al powder. To the obtained ZnS:Al powder were added 0.40g of copper sulfate (CuSO₄•5H₂O) and an appropriate amount of water, and they were mixed sufficiently and dried. To the obtained compound (ZnS:Al) powder with copper sulfate adhered were added appropriate amounts of sulfur and activated carbon. They were charged into a quartz crucible and fired in a reducing atmosphere. The firing conditions were 1000°C×30 minutes.

The obtained fired product was washed sufficiently with water and dried, then sieved to obtain a target green light-emitting ZnS:Cu, Al fluorescent substance. The obtained ZnS:Cu, Al fluorescent substance was subjected to X-ray diffraction to find that it had a crystal structure of hexagonal crystal. For the contents of the individual activators of the ZnS:Cu, Al fluorescent substance, Cu was 1.0×10⁻⁴ g and Al was 9×10⁻⁴ g with respect to 1g of ZnS.

Besides, the distribution of Cu and Al in the ZnS:Cu, Al fluorescent substance was measured and evaluated by EPMA (X-ray microanalyzer). It was found that Al was uniformly distributed in the fluorescent substance particles, while Cu was localized in the surface layer part of the fluorescent substance particles. The ZnS:Cu, Al fluorescent substance (green light-emitting fluorescent substance) was subjected to the characteristic evaluation described later.

### Example 2

A ZnS:Cu, Al fluorescent substance was produced by the same procedure as in Example 1 except that the amount of copper sulfate (CuSO₄•5H₂O) adhered to the ZnS:Al powder was changed to 0.60g. It was confirmed that the ZnS:Cu, Al fluorescent substance had the crystal structure of hexagonal crystal. For the contents of the individual activators, Cu was 1.5×10⁻⁴ g and Al was 9×10⁻⁴ g with respect to 1g of ZnS.

Besides, the distribution of Cu and Al in the ZnS:Cu, Al fluorescent substance was measured and evaluated by EPMA. It was found that Al was uniformly distributed in the entire fluorescent substance particles and Cu was localized in the surface layer part of the fluorescent substance particles. The obtained ZnS:Cu, Al fluorescent substance (green light-emitting fluorescent substance) was subjected to the characteristic evaluation described later.

### Example 3

A ZnS:Cu, Al fluorescent substance was produced by the same procedure as in Example 1 except that the amount of copper sulfate (CuSO₄•5H₂O) adhered to the ZnS:Al powder was changed to 0.80g. It was confirmed that this ZnS:Cu, Al fluorescent substance had the crystal structure of hexagonal crystal. For the contents of the individual activator, Cu was 2.0×10⁻⁴ g and Al was 9×10⁻⁴ g with respect to 1g of ZnS.

Besides, the distribution of Cu and Al in the ZnS:Cu, Al fluorescent substance was measured and evaluated by EPMA. It was found that Al was uniformly distributed in the entire fluorescent substance particles and Cu was localized in the surface layer part of the fluorescent substance particles. The obtained ZnS:Cu, Al fluorescent substance (green light-emitting fluorescent substance) was subjected to the characteristic evaluation described later.

### Comparative Example 1

To 1000g of zinc sulfide (ZnS) were added 0.60g of copper sulfate (CuSO₄•5H₂O), 13.5g of aluminum nitrate (Al (NO₃)₃•9H₂O) and an appropriate amount of water. They were mixed sufficiently and dried. To the obtained fluorescent substance were added sulfur and activated carbon in appropriate amounts, and they were charged in a quartz crucible and fired in a reducing atmosphere. The firing conditions were 1100°C×90 minutes.

Then, the above-described fired product was sufficiently washed with water and dried, then sieved to obtain a green light-emitting ZnS:Cu, Al fluorescent substance. The obtained ZnS:Cu, Al fluorescent substance was subjected to X-ray diffraction to find that it had a crystal structure of hexagonal crystal. For the contents of the individual activators of the ZnS:Cu, Al fluorescent substance, Cu was 1.5×10⁻⁴ g and Al was 9×10⁻⁴ g with respect to 1g of ZnS.

Besides, the distribution of Cu and Al in the ZnS:Cu, Al fluorescent substance was measured and evaluated by EPMA. It was found that Cu and Al were uniformly distributed in the fluorescent substance particles. The ZnS:Cu, Al fluorescent substance (green light-emitting fluorescent substance) was subjected to the characteristic evaluation described later.

### Comparative Example 2

A ZnS:Cu, Al fluorescent substance was produced by the same procedure as in Comparative Example 1 except that the blending amount of copper sulfate (CuSO₄•5H₂O) was changed to 1.20 g. It was confirmed that the ZnS:Cu, Al fluorescent substance had the crystal structure of hexagonal crystal. For the contents of the individual activators, Cu was 3.0×10⁻⁴ g and Al was 9×10⁻⁴ g with respect to 1g of ZnS. Besides, the distribution of Cu and Al in the ZnS:Cu, Al fluorescent substance was measured and evaluated by EPMA. It was found that they were uniformly distributed in the fluorescent substance particles. The obtained ZnS:Cu, Al fluorescent substance (green light-emitting fluorescent substance) was subjected to the characteristic evaluation described later.

### Comparative Example 3

A ZnS:Cu, Al fluorescent substance was produced by the same procedure as in Comparative Example 1 except that the blending amount of copper sulfate (CuSO₄•5H₂O) was changed to 2.40 g. It was confirmed that this ZnS:Cu, Al fluorescent substance had a crystal structure of hexagonal crystal. For the contents of the individual activators, Cu was 6.0×10⁻⁴ g and Al was 9×10⁻⁴ g with respect to 1g of ZnS. Besides, the distribution of Cu and Al in the ZnS:Cu, Al fluorescent substance was measured and evaluated by EPMA. It was found that they were uniformly distributed in the fluorescent substance particles. The obtained ZnS:Cu, Al fluorescent substance (green light-emitting fluorescent substance) was subjected to the characteristic evaluation described later.

The individual green light-emitting fluorescent substances of Examples 1 to 3 and Comparative Examples 1 to 3 each were used to form fluorescent substance films. The obtained fluorescent substance films were examined for emission luminance and emission chromaticity. The individual fluorescent substance films were formed by dispersing each green light-emitting fluorescent substance in an aqueous solution containing polyvinyl alcohol to prepare its slurry and coating the slurry onto a glass substrate by a spin coater. The number of spins of the spin coater and a slurry viscosity were adjusted such that the individual fluorescent substance films had a thickness of 3×10⁻³ mg/mm³.

Emission luminance was measured by irradiating an electron beam having an acceleration voltage of 10 kV and a current density of 2×10⁻⁵ A/mm² to the individual fluorescent substance films. Each luminance was determined assuming that a relative value with the luminance of the fluorescent substance film of Comparative Example 3 was 100. Emission chromaticity was measured by a chromaticity measuring device, MCPD-1000 of Otsuka Electronics Co., Ltd. Emission chromaticity was measured in a dark room where chromaticity at the time of emitting light was not affected from outside.

**Table 1**

| | Activator amount (g/ZnS 1g) | | Luminance (Relative Value) | Luminescent color (CIE chromaticity) | |
|---|---|---|---|---|---|
| | Cu | Al | | x value | y value |
| Example 1 | 1.0×10⁻⁴ | 9.0×10⁻⁴ | 121 | 0.220 | 0.583 |
| Example 2 | 1.5×10⁻⁴ | 9.0×10⁻⁴ | 119 | 0.218 | 0.580 |
| Example 3 | 2.0×10⁻⁴ | 9.0×10⁻⁴ | 118 | 0.215 | 0.574 |
| Comparative Example 1 | 1.5×10⁻⁴ | 9.0×10⁻⁴ | 113 | 0.195 | 0.528 |
| Comparative Example 2 | 3.0×10⁻⁴ | 9.0×10⁻⁴ | 108 | 0.202 | 0.565 |
| Comparative Example 3 | 6.0×10⁻⁴ | 9.0×10⁻⁴ | 100 | 0.219 | 0.580 |

It is apparent from Table 1 that the green light-emitting fluorescent substances formed of the zinc sulfide fluorescent substances of the hexagonal crystal system according to Examples 1 to 3 have good emission chromaticity without deteriorating the emission luminance on the basis of the fact that Cu as the first activator is localized in the surface layer part of the fluorescent substance particles. Meanwhile, it is seen that the emission chromaticity is largely shifted toward the blue side in Comparative Example 1 in which Cu and Al were dispersed uniformly in the fluorescent substance particles and the Cu content was roughly the same as in the individual Examples. It is also seen that the emission chromaticity is slightly corrected in Comparative Examples 2 and 3 in which the Cu content is increased, but the emission luminance is degraded with the increase of the Cu content.

### Example 4

The green light-emitting fluorescent substance according to Example 1, a blue light-emitting fluorescent substance (ZnS:Ag, Al fluorescent substance) and a red light-emitting fluorescent substance (Y₂O₂S:Eu fluorescent substance) were used to prepare a face plate by forming a fluorescent substance layer on a glass substrate. The face plate and a rear plate which had a large number of electron emission elements were assembled with a support frame between them, and the space between them was hermetically sealed while evacuating. It was confirmed that the obtained FED had outstanding color reproducibility and good display characteristics even after a rated operation at normal temperature for 1000 hours.

### Example 5

To 1000g of zinc sulfide (ZnS) were added 13.5 g of aluminum nitrate (Al(NO₃)₃•9H₂O) and an appropriate amount of water, and they were mixed sufficiently and dried. To the prepared raw material for a fluorescent substance were added sulfur and activated carbon in appropriate amounts, they were charged in a quartz crucible and fired in a reducing atmosphere. The firing conditions were 970°C×90 minutes.

Then, the above fired product was washed with water and dried, then sieved to obtain ZnS:Al powder. To the obtained ZnS:Al powder were added 0.95 g of silver nitrate (AgNO₃) and an appropriate amount of water, and they were mixed sufficiently and dried. Appropriate amounts of sulfur and activated carbon were added to the compound (ZnS:Al) powder with silver nitrate adhered. They were charged into a quartz crucible and fired in a reducing atmosphere. The firing conditions were 970°C×30 minutes.

The obtained fired product was washed sufficiently with water and dried, then sieved to obtain a target green light-emitting ZnS:Ag, Al fluorescent substance. The obtained ZnS:Ag, Al fluorescent substance was subjected to X-ray diffraction to find that it had the crystal structure of cubic crystal. For the contents of the individual activators of the ZnS:Ag, Al fluorescent substance, Ag was 6×10⁻⁴ g and Al was 9×10⁻⁴ g with respect to 1g of ZnS.

Besides, the distribution of Ag and Al in the ZnS:Ag, Al fluorescent substance was measured and evaluated by EPMA. It was found that Al was uniformly distributed in the fluorescent substance particles and Ag was localized in the surface layer part of the fluorescent substance particles. The obtained ZnS:Ag, Al fluorescent substance (blue light-emitting fluorescent substance) was subjected to the characteristic evaluation described later.

### Example 6

A ZnS:Ag, Al fluorescent substance was produced by the same procedure as in Example 5 except that the amount of silver nitrate (AgNO₃) adhered to the ZnS:Al powder was changed to 0.64 g. It was confirmed that the ZnS:Ag, Al fluorescent substance had a crystal structure of cubic crystal. For the contents of the individual activators, Ag was 4×10⁻⁴ g and Al was 9×10⁻⁴ g with respect to 1g of ZnS.

Besides, the distribution of Ag and Al in the ZnS:Ag, Al fluorescent substance was measured and evaluated by EPMA. It was found that Al was uniformly distributed in the entire fluorescent substance particles while Ag was localized in the surface layer part of the fluorescent substance particles. The obtained ZnS:Ag, Al fluorescent substance (blue light-emitting fluorescent substance) was subjected to the characteristic evaluation described later.

### Example 7

A ZnS:Ag, Al fluorescent substance was produced by the same procedure as in Example 5 except that the amount of silver nitrate (AgNO₃) adhered to the ZnS:Al powder was changed to 0.32 g. It was confirmed that the ZnS:Ag, Al fluorescent substance had a crystal structure of cubic crystal. For the contents of the individual activators, Ag was 2×10⁻⁴ g and Al was 9×10⁻⁴ g with respect to 1g of ZnS.

Besides, the distribution of Ag and Al in the ZnS:Ag, Al fluorescent substance was measured and evaluated by EPMA. It was found that Al was uniformly distributed in the entire fluorescent substance particles while Ag was localized in the surface layer part of the fluorescent substance particles. The obtained ZnS:Ag, Al fluorescent substance (blue light-emitting fluorescent substance) was subjected to the characteristic evaluation described later.

### Comparative Example 4

To 1000 g of zinc sulfide (ZnS) were added 0.95 g of silver nitrate (AgNO₃), 13.5 g of aluminum nitrate (Al(NO₃)₃•9H₂O) and an appropriate amount of water. They were mixed sufficiently and dried. To the obtained raw material for a fluorescent substance were added sulfur and activated carbon in appropriate amounts, and they were charged in a quartz crucible and fired in a reducing atmosphere. The firing conditions were 970°C×90 minutes. Then, the above fired product was sufficiently washed with water and dried, then sieved to obtain a blue light-emitting ZnS:Ag, Al fluorescent substance.

The obtained ZnS:Ag, Al fluorescent substance was subjected to X-ray diffraction to find that it had the crystal structure of cubic crystal. For the contents of the individual activators of the ZnS:Ag, Al fluorescent substance, Ag was 6×10⁻⁴ g and Al was 9×10⁻⁴ g with respect to 1g of ZnS. Besides, the distribution of Ag and Al in the ZnS:Ag, Al fluorescent substance was measured and evaluated by EPMA. It was found that Ag and Al were uniformly distributed in the fluorescent substance particles. The ZnS:Ag, Al fluorescent substance (blue light-emitting fluorescent substance) was subjected to the characteristic evaluation described later.

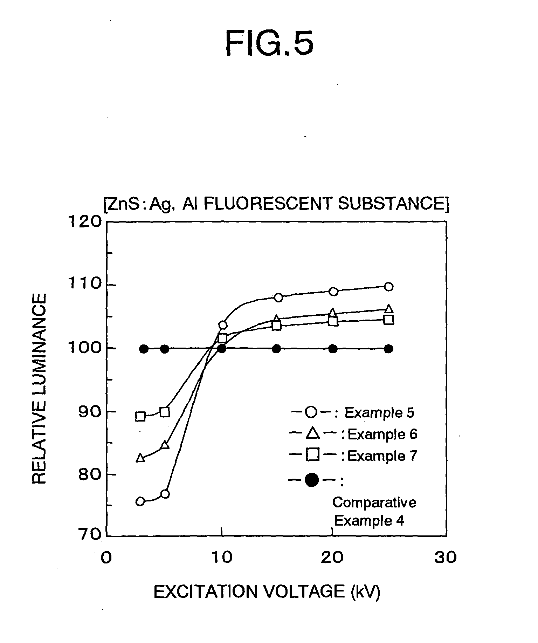

The individual blue light-emitting fluorescent substances of Examples 5 to 7 and Comparative Example 4 each were used to form fluorescent substance films. The obtained fluorescent substance films were measured and evaluated for a change in emission luminance due to an excitation voltage. The results are shown in Fig. 5. The individual fluorescent substance films were formed by dispersing each fluorescent substance in an aqueous solution containing polyvinyl alcohol to prepare its slurry and coating the slurry onto a glass substrate by a spin coater. The number of spins of the spin coater and a slurry viscosity were adjusted such that the individual fluorescent substance films had a thickness of 3×10⁻³ mg/mm³. Emission luminance was measured by irradiating sequentially an electron beam, which had an acceleration voltage of 25 kV and a current density of 1×10⁻³ A/mm² as the standard, with the acceleration voltage varied to each fluorescent substance film. Each luminance was determined as a relative value assuming that the luminance of the fluorescent substance film of Comparative Example 4 was 100.

It is apparent from Fig. 5 that the blue light-emitting fluorescent substances (zinc sulfide fluorescent substances) according to Examples 5 to 7 have luminance lower than that of the blue light-emitting fluorescent substance of Comparative Example 4 when excited by the electron beam on the low voltage side. It is based on Ag (first activator) which is localized in the surface layer part of the fluorescent substance particles as described above. It is also seen that, when the excitation voltage of the electron beam is increased, the emission luminances of the blue light-emitting fluorescent substances according to Examples 5 to 7 rise. Therefore, it becomes possible to provide high luminance at the time of excitation by the electron beam on the high voltage side by appropriately setting the Ag content.

### Example 8

To 1000g of zinc sulfide (ZnS) were added 13.5 g of aluminum nitrate (Al(NO₃)₃•9H₂O) and an appropriate amount of water, and they were mixed sufficiently and dried. To the prepared fluorescent substance were added sulfur and activated carbon in appropriate amounts, and they were charged in a quartz crucible and fired in a reducing atmosphere. The firing conditions were 970°C×90 minutes.

Then, the above fired product was washed with water and dried, then sieved to obtain ZnS:Al powder. To the obtained ZnS:Al powder were added 0.68 g of copper sulfate (CuSO₄•5H₂O) and an appropriate amount of water, and they were mixed sufficiently and dried. To the obtained compound (ZnS:Al) powder with copper sulfate adhered were added appropriate amounts of sulfur and activated carbon. They were charged into a quartz crucible and fired in a reducing atmosphere. The firing conditions were 970°C×30 minutes.

The obtained fired product was washed sufficiently with water and dried, then sieved to obtain a target green light-emitting ZnS:Cu, Al fluorescent substance. The obtained ZnS:Cu, Al fluorescent substance was subjected to X-ray diffraction to find that it had a crystal structure of cubit crystal. For the contents of the individual activators of the ZnS:Cu, Al fluorescent substance, Cu was 1.7×10⁻⁴ g and Al was 9×10⁻⁴ g with respect to 1g of ZnS.

Besides, the distribution of Cu and Al in the ZnS:Cu, Al fluorescent substance was measured and evaluated by EPMA. It was found that Al was uniformly distributed in the fluorescent substance particles and Cu was localized in the surface layer part of the fluorescent substance particles. The obtained ZnS:Cu, Al fluorescent substance (green light-emitting fluorescent substance) was subjected to the characteristic evaluation described later.

### Example 9

A ZnS:Cu, Al fluorescent substance was produced by the same procedure as in Example 8 except that the amount of copper sulfate (CuSO₄•5H₂O) adhered to the ZnS:Al powder was changed to 0.40 g. It was confirmed that the ZnS:Cu, Al fluorescent substance had the crystal structure of cubic crystal. For the contents of the individual activators, Cu was 1×10⁻⁴ g and Al was 9×10⁻⁴ g with respect to 1g of ZnS.

Besides, the distribution of Cu and Al in the ZnS:Cu, Al fluorescent substance was measured and evaluated by EPMA. It was found that Al was uniformly distributed in the entire fluorescent substance particles and Cu was localized in the surface layer part of the fluorescent substance particles. The obtained ZnS:Cu, Al fluorescent substance (green light-emitting fluorescent substance) was subjected to the characteristic evaluation described later.

### Example 10

A ZnS:Cu, Al fluorescent substance was produced by the same procedure as in Example 8 except that the amount of copper sulfate (CuSO₄•5H₂O) adhered to the ZnS:Al powder was changed to 1.00 g. It was confirmed that this ZnS:Cu, Al fluorescent substance had a crystal structure of cubic crystal. For the contents of the individual activator, Cu was 2.5×10⁻⁴ g and Al was 9×10⁻⁴ g with respect to 1g of ZnS.

Besides, the distribution of Cu and Al in the ZnS:Cu, Al fluorescent substance was measured and evaluated by EPMA. It was found that Al was uniformly distributed in the entire fluorescent substance particles and Cu was localized in the surface layer part of the fluorescent substance particles.
The obtained ZnS:Cu, Al fluorescent substance (green light-emitting fluorescent substance) was subjected to the characteristic evaluation described later.

### Comparative Example 5

To 1000 g of zinc sulfide (ZnS) were added 0.68 g of copper sulfate (CuSO₄•5H₂O), 13.5 g of aluminum nitrate (Al(NO₃)₃•9H₂O) and an appropriate amount of water. They were mixed sufficiently and dried. To the obtained fluorescent substance were added sulfur and activated carbon in appropriate amounts, and they were charged in a quartz crucible and fired in a reducing atmosphere. The firing conditions were 970°C×60 minutes. Then, the above fired product was sufficiently washed with water and dried, then sieved to obtain a green light-emitting ZnS:Cu, Al fluorescent substance.

The obtained ZnS:Cu, Al fluorescent substance was subjected to X-ray diffraction to find that it had a crystal structure of cubic crystal. For the contents of the individual activators of the ZnS:Cu, Al fluorescent substance, Cu was 1.7×10⁻⁴ g and Al was 9×10⁻⁴ g with respect to 1g of ZnS. Besides, the distribution of Cu and Al in the ZnS:Cu, Al fluorescent substance was measured and evaluated by EPMA. It was found that Cu and Al were uniformly distributed in the fluorescent substance particles. The ZnS:Cu, Al fluorescent substance (green light-emitting fluorescent substance) was subjected to the characteristic evaluation described later.

### Example 11

To 1000g of zinc sulfide (ZnS) were added 13.5 g of aluminum nitrate (Al(NO₃)₃•9H₂O) and an appropriate amount of water, and they were mixed sufficiently and dried. To the prepared fluorescent substance were added sulfur and activated carbon in appropriate amounts, and they were charged in a quartz crucible and fired in a reducing atmosphere. The firing conditions were 970°C×90 minutes.

Then, the above-described fired product was washed with water and dried, then sieved to obtain ZnS:Al powder. To the obtained ZnS:Al powder were added 0.40 g of copper sulfate (CuSO₄•5H₂O), 0.21 g of chloroauric acid (H[AuCl₄]•4H₂O) and an appropriate amount of water, and they were mixed sufficiently and dried. Appropriate amounts of sulfur and activated carbon were added to the compound (ZnS:Al) powder with copper sulfate and chloroauric acid adhered. They were charged into a quartz crucible and fired in a reducing atmosphere. The firing conditions were 970°C×30 minutes.

The obtained fired product was washed sufficiently with water and dried, then sieved to obtain a target green light-emitting ZnS:Cu, Au, Al fluorescent substance. The obtained ZnS:Cu, Au, Al fluorescent substance was subjected to X-ray diffraction to find that it had a crystal structure of cubit crystal. For the contents of the individual activators of the ZnS:Cu, Au, Al fluorescent substance, Cu was 1×10⁻⁴ g, Au was 1×10⁻⁴ g and Al was 9×10⁻⁴ g with respect to 1g of ZnS.

Besides, the distribution of Cu, Au and Al in the ZnS:Cu, Au, Al fluorescent substance was measured and evaluated by EPMA. It was found that Al was uniformly distributed in the fluorescent substance particles and Cu and Au were localized in the surface layer part of the fluorescent substance particles. The obtained ZnS:Cu, Au, Al fluorescent substance (green light-emitting fluorescent substance) was subjected to the characteristic evaluation described later.

### Comparative Example 6

To 1000 g of zinc sulfide (ZnS) were added 0.68 g of copper sulfate (CuSO₄•5H₂O), 0.21g of chloroauric acid (H[AuCl₄]•4H₂O), 13.5g of aluminum nitrate (Al(NO₃)₃•9H₂O) and an appropriate amount of water. They were mixed sufficiently and dried. To the obtained fluorescent substance were added sulfur and activated carbon in appropriate amounts, and they were charged in a quartz crucible and fired in a reducing atmosphere. The firing conditions were 970°C×60 minutes. Then, the above-described fired product was sufficiently washed with water and dried, then sieved to obtain a green light-emitting ZnS:Cu, Au, Al fluorescent substance.

The obtained ZnS:Cu, Au, Al fluorescent substance was subjected to X-ray diffraction to find that it had a crystal structure of cubic crystal. For the contents of the individual activators of the ZnS:Cu, Au, Al fluorescent substance, Cu was 1.7×10⁻⁴ g, Au was 1×10⁻⁴ g and Al was 9×10⁻⁴ g with respect to 1g of ZnS. Besides, the distribution of Cu, Au and Al in the ZnS:Cu, Au, Al fluorescent substance was measured and evaluated by EPMA. It was found that Cu, Au and Al were uniformly distributed in the fluorescent substance particles. The ZnS:Cu, Au, Al fluorescent substance (green light-emitting fluorescent substance) was subjected to the characteristic evaluation described later.

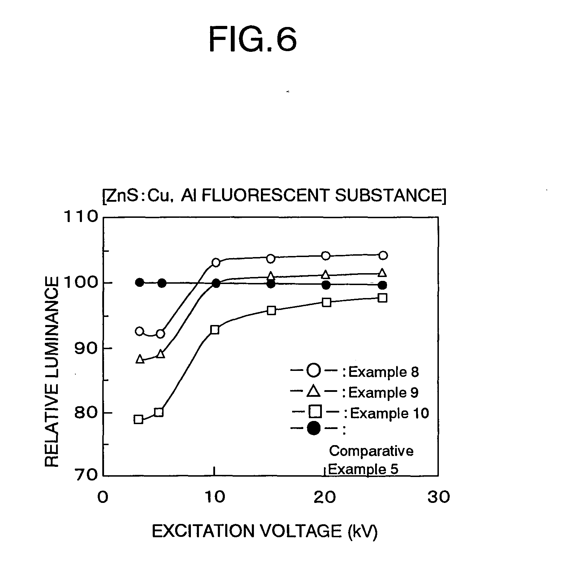

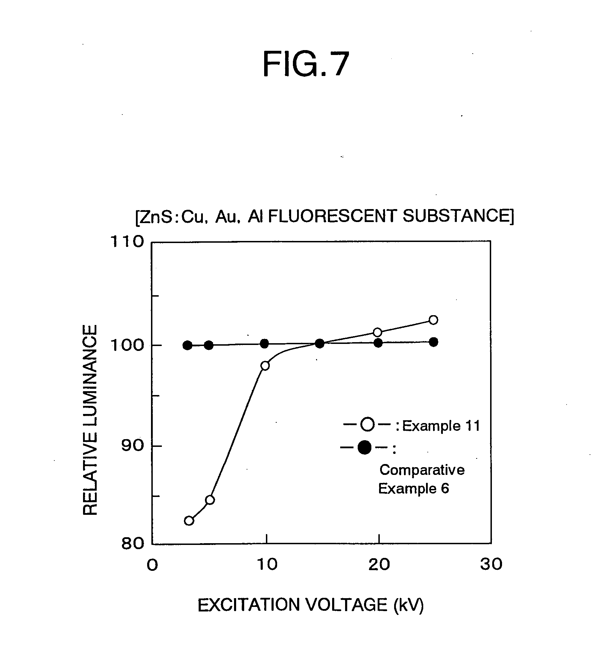

The individual green light-emitting fluorescent substances (ZnS:Cu, Al fluorescent substances) of Examples 8 and 9 and Comparative Example 5 and the individual green light-emitting fluorescent substances (ZnS:Cu, Au, Al fluorescent substances) of Example 11 and Comparative Example 6 were used to form fluorescent substance films. The obtained fluorescent substance films were measured and evaluated for a change in emission luminance due to an excitation voltage. The results are shown in Fig. 6 and Fig. 7. The changes in emission luminance of the individual fluorescent substance films due to the excitation voltage were measured in the same manner as that of the above-described blue light-emitting fluorescent substances. The luminances of Examples 8 to 10 were determined as relative values assuming that the luminance of the fluorescent substance film of Comparative Example 5 was 100. The luminance of Example 11 was determined as a relative value assuming that the luminance of the fluorescent substance film of Comparative Example 6 was 100.

It is apparent from Fig. 6 and Fig. 7 that the green light-emitting fluorescent substances (zinc sulfide fluorescent substances) according to Examples 8 to 11 have luminance lower than those of the green light-emitting fluorescent substances according to Comparative Examples 5 and 6 when excited by the electron beam on the low voltage side. It is based on the first activator which is localized in the surface layer part of the fluorescent substance particles as described above. Meanwhile, when the electron beam excitation voltage is increased, the emission luminances of the green light-emitting fluorescent substances according to Examples 8 to 11 rise. And, it becomes possible to provide high luminance at the time of excitation by the electron beam on the high voltage side by appropriately setting the first activator content.

### Example 12

The blue light-emitting fluorescent substance (ZnS:Ag, Al fluorescent substance) according to Example 5, the green light-emitting fluorescent substance (ZnS:Cu, Al fluorescent substance) according to Example 8 and a red light-emitting fluorescent substance (Y₂O₂S:Eu, Tb fluorescent substance (Eu activation amount=6%, Tb activation amount=20 ppm)) were used to prepare fluorescent screen-forming fluorescent substance slurries. The prepared fluorescent substance slurries each were used to form a fluorescent screen on the inside surface of a 14-inch glass panel, and a color cathode ray tube was produced by a conventional method. The produced color cathode ray tube was subjected to the characteristic evaluation described later.

### Comparative Example 7

The blue light-emitting fluorescent substance (ZnS:Ag, Al fluorescent substance) according to Comparative Example 4, the green light-emitting fluorescent substance (ZnS:Cu, Al fluorescent substance) according to Comparative Example 5 and a red light-emitting fluorescent substance (Y₂O₂S:Eu, Tb fluorescent substance (Eu activation amount=6%, Tb activation amount=20 ppm)) each were used to prepare fluorescent screen-forming fluorescent substance slurries. The prepared fluorescent substance slurries each were used to form a fluorescent screen on the inside surface of a 14-inch glass panel, and a color cathode ray tube was produced by a conventional method. The produced color cathode ray tube was subjected to the characteristic evaluation described later.

The color cathode ray tubes according to Example 12 and Comparative Example 7 were used to measure and evaluate an image contrast as follows. First, white luminance (total current=Wib of the cathode required for brightness of (9300K + 27MPCD)) and dark portion luminance of the individual color cathode ray tubes were measured.

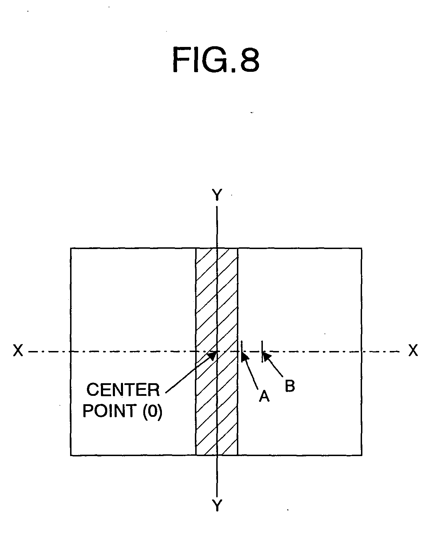

For measurement of white luminance and dark portion luminance, the white luminance was measured at a center point (O) assuming that a scanning width for showing a white bar of the electron beam was 23.8 mm in a horizontal axis (X) direction with a vertical axis (Y) on a fluorescent surface determined as the center as shown in Fig. 8. And, black level luminance was measured as the dark portion luminance at a point (A) 35 mm away and a point (B) 70 mm away in the horizontal axis (X) direction from the center point (O) on the fluorescent surface when it was assumed that a total current of the cathode was 300 µA. The white luminance and the dark portion luminance were relatively determined with Comparative Example 7 as the standard. The obtained values are shown in Table 2.

**Table 2**

| | White luminance (Relative value) | Dark portion luminance (Relative value) | Evaluated result of contrast |
|---|---|---|---|
| Example 12 | 102 | 70 | Dark portion luminance decreased |
| Comparative Example 7 | 100 | 100 | - |

As apparent from the values of the dark portion luminance (Example 12 is lower than Comparative Example 7) in Table 2, it is seen that the color cathode ray tube of Example 12 using the blue light-emitting fluorescent substance and the green light-emitting fluorescent substance of the present invention has higher contrast in comparison with Comparative Example 7 using a conventional blue light-emitting fluorescent substance and green light-emitting fluorescent substance.

### INDUSTRIAL APPLICABILITY

The fluorescent substance for display unit of the present invention is suitably used for a display unit, such as a color cathode ray tube, a field emission type display unit, or the like, which is provided with a large screen, high quality, high definition and the like. For example, a luminescent color of a zinc sulfide fluorescent substance of a hexagonal crystal system of which resistance to an electron beam having a high current density or the like is enhanced can be improved. Therefore, the electron beam for exciting the fluorescent screen is made to comply with the provision of a high current density by using the above fluorescent substance for display unit, and it becomes possible to provide a color display unit which is improved its display characteristics such as color reproducibility. Besides, unwanted light emission of the fluorescent substance by a low voltage electron beam can be suppressed. Therefore, the use of the above fluorescent substance for display unit makes it possible to provide a color display unit with its contrast characteristic improved after providing it with a high definition and high quality.

## Claims

1. A fluorescent substance for display unit, comprising:
fluorescent substance matrix particles;
a first activator which is localized in a surface layer part of the fluorescent substance matrix particles; and
a second activator which is uniformly dispersed in the fluorescent substance matrix particles.

2. A fluorescent substance for display unit according to claim 1, wherein the fluorescent substance matrix particles are substantially formed of zinc sulfide.

3. A fluorescent substance for display unit according to claim 1, wherein the fluorescent substance matrix particles are substantially formed of zinc sulfide having a crystal structure composed mainly of hexagonal crystal.

4. A fluorescent substance for display unit according to claim 3, wherein the first activator is formed of at least one element selected from Cu and Au, and the second activator is formed of Al.

5. A fluorescent substance for display unit according to claim 3, wherein the fluorescent substance is a green light-emitting fluorescent substance having a composition represented substantially by a general formula:
ZnS:CUₐ, Al_{b}
(where, a and b each represent an amount in a range of 1×10⁻⁵ ≤ a ≤ 1×10⁻³ g and 1×10⁻⁵ ≤ b ≤ 5×10⁻³ g with respect to 1g of zinc sulfide which is the fluorescent substance matrix).

6. A fluorescent substance for display unit according to claim 3, wherein the fluorescent substance is used for a color cathode ray tube or a field emission type display unit.

7. A fluorescent substance for display unit according to claim 1, wherein the fluorescent substance matrix particles are substantially formed of zinc sulfide having a crystal structure composed mainly of cubic crystal.

8. A fluorescent substance for display unit according to claim 7, wherein the first activator is formed of at least one element selected from Ag, Cu and Au, and the second activator is at least one element selected from Al and Cl.

9. A fluorescent substance for display unit according to claim 7, wherein the fluorescent substance is a blue light-emitting fluorescent substance having a composition represented substantially by a general formula:
ZnS:Ag_{c}, M_{d}
(where, M represents at least one type of element selected from Al and Cl, a and b each represent an amount in a range of 1×10⁻⁵ ≤ c ≤ 2×10⁻³ g and 1×10⁻⁵ ≤ d ≤ 5×10⁻³ g with respect to 1g of zinc sulfide which is the fluorescent substance matrix).

10. A fluorescent substance for display unit according to claim 7, wherein the fluorescent substance is a green light-emitting fluorescent substance having a composition represented substantially by a general formula:
ZnS:Cuₑ, Au_{f}, Al_{g}
(where, e, f and g each represent an amount in a range of 1×10⁻⁵ ≤ c ≤ 1×10⁻³ g, 0 ≤ d ≤ 2×10⁻³ g, 1×10⁻⁵ ≤ c+d ≤ 2×10⁻³ g and 1×10⁻⁵ ≤ e ≤ 5×10⁻³ g with respect to 1g of zinc sulfide which is the fluorescent substance matrix).

11. A fluorescent substance for display unit according to claim 7, wherein the fluorescent substance is used for a color cathode ray tube.

12. A process for producing a fluorescent substance for display unit comprising fluorescent substance matrix particles containing a first activator and a second activator, comprising:
containing uniformly the second activator in the fluorescent substance matrix particles; and
doping the first activator into the surface layer part of the fluorescent substance matrix particles containing the second activator.

13. A process for producing a fluorescent substance for display unit according to claim 12, wherein the first activator doping step has a step of adhering a metal element configuring the first activator or a compound containing the metal element to the surface of the fluorescent substance matrix particles and firing them in the adhered state.

14. A process for producing a fluorescent substance for display unit according to claim 12, wherein the fluorescent substance matrix particles are substantially formed of zinc sulfide having a crystal structure composed mainly of hexagonal crystal or cubic crystal.

15. A process for producing a fluorescent substance for display unit according to claim 14, wherein the first activator is formed of at least one element selected from Ag, Cu and Au, and the second activator is formed of at least one element selected from Al and Cl.

16. A color display unit, comprising:
a fluorescent screen having the fluorescent substance for display unit according to claim 1;
an electron source which irradiates an electron beam to the fluorescent screen to emit light; and
an envelope which vacuum-seals the electron source and the fluorescent screen.

17. A color display unit according to claim 16, wherein the fluorescent screen contains a blue light-emitting fluorescent substance, a green light-emitting fluorescent substance and a red light-emitting fluorescent substance, and has the fluorescent substance for display unit as the green light-emitting fluorescent substance.

18. A color display unit according to claim 17, comprising a color cathode ray tube or a field emission type display unit.

19. A color display unit according to claim 16, wherein the fluorescent screen contains a blue light-emitting fluorescent substance, a green light-emitting fluorescent substance and a red light-emitting fluorescent substance, and has the fluorescent substance for display unit as at least either of the blue light-emitting fluorescent substance and the green light-emitting fluorescent substance.

20. A color display unit according to claim 19, comprising a color cathode ray tube.
